# EUROPEAN PATENT APPLICATION

(11) **EP 3 293 713 A1**
(43) Date of publication of application: **14.03.2018**
(21) Application number: 17190864.3
(22) Date of filing: 13.09.2017
(51) Int. Cl.: G07G 1/00, G07G 3/00

(54) **SETTLEMENT APPARATUS AND METHOD OF SETTLING A TRANSACTION USING THE SAME**

(30) Priority: 13.09.2016 JP 2016178762
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); SUSAKI, Akiko, Shinagawa-ku,, Tokyo 141-8562 (JP); SHISHIDO, Norifumi, Shinagawa-ku,, Tokyo 141-8562 (JP)
(74) Representative: Takeuchi, Maya

(57) **Abstract**

A settlement apparatus includes a first sensor that indicates whether a person is not in front of the settlement apparatus, a receiving and discharging device receives and discharges items in connection with a transaction, a second sensor indicating determines whether an item discharged from the discharge device has not been taken, and a processor. The processor performs a settlement processing for settling the transaction, and the receiving and discharging device discharges one or more items in connection with the settlement processing. The processor determines whether the person is not in front of the settlement apparatus, and whether the one or more discharged items have not been taken. If the person is not in front of the settlement apparatus and if the one or more discharged items have not been taken, the output device outputs a notification indicating that the one or more items have not been taken.

## Description

### FIELD

The present invention relates to a technology in the field of purchase settlement in general, and embodiments described herein relate more particularly to a settlement device or apparatus, and a method of settling a transaction using the same.

### BACKGROUND

A settlement apparatus that performs settlement in response to an operation of a purchaser can discharge an article such as change or a credit card after the end of the settlement. The discharged article is intended to be taken by the purchaser.

However, in a case where the purchaser forgets to take the discharged article, there is no way to notify the purchaser to that effect. As a result, it is difficult to return the article to the purchaser unless the purchaser realizes the fact himself/herself and requests return of the article.

To solve such problems, there is provided a settlement device comprising:
a first sensor that outputs a first signal indicating whether a person is not in front of the settlement apparatus;
a receiving and discharging device that receives and discharges items in connection with settling a transaction;
a second sensor that outputs a second signal indicating whether an item discharged from the discharge device has not been taken;
an output device; and
a processor configured to:
   perform a settlement processing for settling the transaction,
   control the receiving and discharging device to discharge one or more
items in connection with the settlement processing,
   receive the first signal and, based on the first signal, determine whether the person is not in front of the settlement apparatus,
   receive the second signal and, based on the second signal, determine whether the one or more items discharged from the receiving and discharging device have not been taken, and
   if the person is determined to not be in front of the settlement apparatus and if the one or more items discharged from the receiving and discharging device are determined to have not been taken, control the output device to output a notification indicating that the one or more items have not been taken.

Preferably, the receiving and discharging device includes a coin receiving unit that receives coins and a coin discharging unit that discharges coins to a tray.

Preferably still, the receiving and discharging device includes a bill receiving unit that receives bills and a bill discharging unit that discharges bills and holds the bills in a discharged state until the discharged bills are taken.

Preferably yet, the receiving and discharging device receives and discharges a card used in connection with the transaction.

Suitably, the output device is a lamp, and
the processor controls the lamp to perform a flashing operation as the notification.

Suitably, 6. The device according to any one of claims 1 to 5, wherein:
the output device is a printer, and
the processor controls the printer to print a message on a receipt as the notification.

Suitably still, the output device is a communication interface, and
the processor generates an electronic message indicating that the one or more items have not been taken, and controls the communication interface to transmit the electronic message as the notification.

Suitably yet, the processor generates an electronic receipt with information regarding the transaction, and
the electronic message is added to the electronic receipt.

In the above device, the electronic receipt is preferably transmitted to an electronic receipt server.

Also in the above device, the electronic message is preferably a text message transmitted to a device associated with a customer identified in connection with the transaction.

The invention also relates to a method of performing a settlement transaction in a settlement apparatus, comprising the steps of:
determining an amount of money due for settling the transaction;
receiving a payment of money for settling the transaction;
discharging, with a discharging device of the settlement apparatus, one or more items based on the received payment;
after discharging the one or more items, determining with a first sensor whether a person is not in front of the discharge device;
determining with a second sensor whether the one or more items discharged from the discharging device have not been taken; and
if the person is determined to not be in front of the settlement apparatus and if the one or more items discharged from the discharging device are determined to have not been taken, outputting a notification indicating that the one or more items have not been taken.

Suitably, the discharging device discharges coins to a tray based on the received payment.

Suitably still, the discharging device discharges bills based on the received payment and holds the bills in a discharged state until the discharged bills are taken.

Suitably yet, the discharging device receives and discharges a card used in connection with the transaction.

Typically, the output device is a lamp, and
outputting the notification includes controlling the lamp to perform a flashing operation.

Typically still, the output device is a printer, and
outputting the notification includes controlling the printer to print a message on a receipt.

Typically yet, the output device is a communication interface, and
outputting the notification includes generating an electronic message indicating that the one or more items have not been taken, and controlling the communication interface to transmit the electronic message.

In the above method, the processor preferably generates an electronic receipt with information regarding the transaction, and
the electronic message is added to the electronic receipt.

Also in the above method, the electronic receipt is preferably transmitted to an electronic receipt server.

Further in the above method, the electronic message is preferably a text message transmitted to a device associated with a customer identified in connection with the transaction.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view of an example checkout apparatus according to a first embodiment.
FIG. 2 is a perspective view illustrating a portion of the checkout apparatus illustrated in FIG. 1.
FIG. 3 is a block diagram illustrating a main circuit configuration of the checkout apparatus and a receipt server.
FIGS. 4 and 5 illustrate a flowchart of control processing performed by the checkout apparatus according to the first embodiment.
FIG. 6 illustrates an example of an electronic receipt screen related to a commercial transaction in which change is not forgotten to be taken.
FIG. 7 illustrates an example of an electronic receipt screen related to a commercial transaction in which change is forgotten to be taken.
FIGS. 8 and 9 is a flowchart of control processing according to a second embodiment that is performed by the CPU included in the checkout apparatus illustrated in FIG. 3.
FIGS. 9 and 10 illustrate a flowchart of the control processing performed by the checkout apparatus according to a second embodiment.
FIG. 11 illustrates an example of a pop-up screen in a state of being superimposed on the electronic receipt screen illustrated in FIG. 6.

### DETAILED DESCRIPTION

An exemplary embodiment provides a settlement device or apparatus for use in a checkout system, and a related method, which can cause a purchaser to realize a fact that an article is forgotten to be taken.

A settlement apparatus according to an embodiment includes a first sensor that outputs a first signal indicating whether a person is not in front of the settlement apparatus, a receiving and discharging device receives and discharges items in connection with settling a transaction, a second sensor outputs a second signal indicating whether an item discharged from the discharge device has not been taken, an output device outputs information to the person, and a processor. The processor performs a settlement processing for settling the transaction. The receiving and discharging device discharges one or more items in connection with the settlement processing. Based on the first signal, the processor determines whether the person is not in front of the settlement apparatus. Based on the second signal, the processor determines whether the one or more items discharged from the receiving and discharging device have not been taken. If the person is determined to not be in front of the settlement apparatus and if the one or more items discharged from the receiving and discharging device are determined to have not been taken, the output device outputs a notification indicating that the one or more items have not been taken.

### First Embodiment

Hereinafter, a first embodiment will be described with reference to the drawings. In the first embodiment, a checkout system that includes a self-service type checkout apparatus having a function as a settlement apparatus and a receipt server will be described as an example.

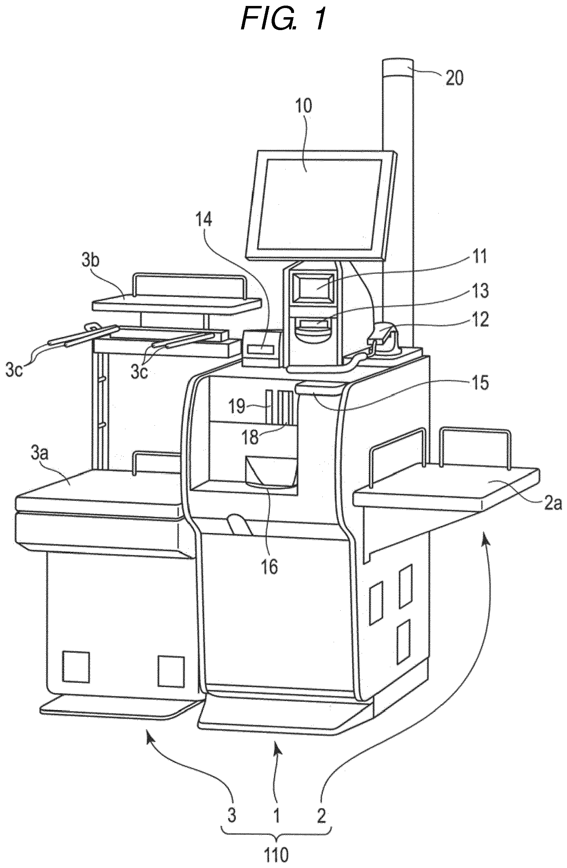

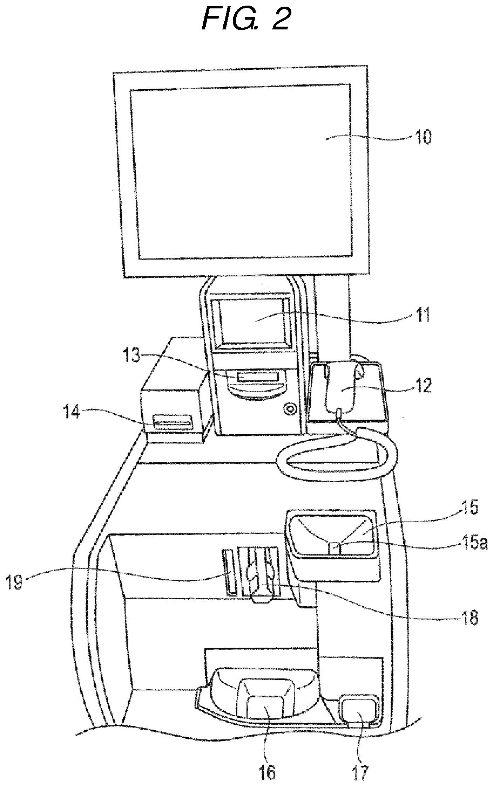

FIG. 1 is a perspective view of the checkout apparatus 110. FIG. 2 is a perspective view illustrating a portion of the checkout apparatus 110. The checkout apparatus 110 according to the first embodiment is also known as a self-service checkout type POS terminal or a self-service cash register. The checkout apparatus 110 is operated by a shopper. Thus, the shopper is an operator of the checkout apparatus 110.

The checkout apparatus 110 includes a main body 1 and measurement units 2 and 3.

The main body 1 includes a touch panel 10, a scanner window 11, a hand-held scanner 12, a receipt issue slot 13, a card insertion slot 14, a coin input tray 15, a change tray 16, a reject tray 17, a bill insertion slot 18, a bill discharge slot 19, and a pilot lamp 20.

The touch panel 10 displays various screens for providing various information to the shopper. This screen may be, for example, as follows; (1) a guide screen for guiding the shopper with respect to an operation method, (2) an information input screen for inputting information with respect to merchandise to which a bar code is not attached, (3) a read information display screen for displaying information based on the bar code which is read, and (4) a settlement screen for displaying a total purchase amount, a deposited amount, and a change amount, and the like when performing payment processing for payment of the purchase amount. Some of these screens are configured with a graphical user interface (GUI), and the touch panel 10 receives a touch operation for a GUI operation.

The scanner window 11 is formed by covering an opening formed in the main body 1 with transparent resin or glass.
The scanner window 11 allows a fixed scanner disposed inside the main body 1 to scan merchandise that is held over the front of the scanner window 11 by the shopper. The fixed scanner will be described later.

The hand-held scanner 12 reads the bar code displayed on the merchandise, and outputs information represented by the bar code.

The receipt issue slot 13 is a slit-shaped opening for discharging a receipt to the outside of the main body 1.

The card insertion slot 14 is a slit-shaped opening for inserting a card into the inside of the main body 1 and discharging the card to the outside of the main body 1.

The coin input tray 15 receives coins which are inserted for settlement by the shopper. An opening 15a is formed at the bottom surface of the coin input tray 15, and the coins received by the coin input tray 15 are received inside of the main body 1 from the opening 15a.

The change tray 16 receives coins discharged from the main body 1 as change. The coin discharged as change is an example of an article to be discharged after the end of the settlement processing. The change tray 16 is an example of a receiving device.

The reject tray 17 receives a coin discharged from the main body 1 as an unusable coin.

The bill insertion slot 18 is a slit-shaped opening for taking a bill (i.e., paper currency) for settlement inserted by the shopper into the main body 1.

The bill discharge slot 19 is a slit-shaped opening for discharging a bill as change from the main body 1. The bill discharge slot 19 holds a bill in a state where a portion of the bill protrudes to the outside of the main body 1. The bill discharged as change is another example of an article to be discharged after the end of the settlement processing. The bill discharge slot 19 is an example of a receiving unit.

The pilot lamp 20 performs a flashing operation for an alarm.

The measurement unit 2 includes a stand 2a for placing unregistered merchandise. The measurement unit 2 measures the total weight of the merchandise placed on the stand 2a.

The measurement unit 3 includes stands 3a and 3b on which registered merchandise is placed, and arms 3c on which a bag for putting the registered merchandise is hung. The measurement unit 3 measures the total weight of the merchandise placed on the stands 3a and 3b and the merchandise in the bag hung on the arm 3c.

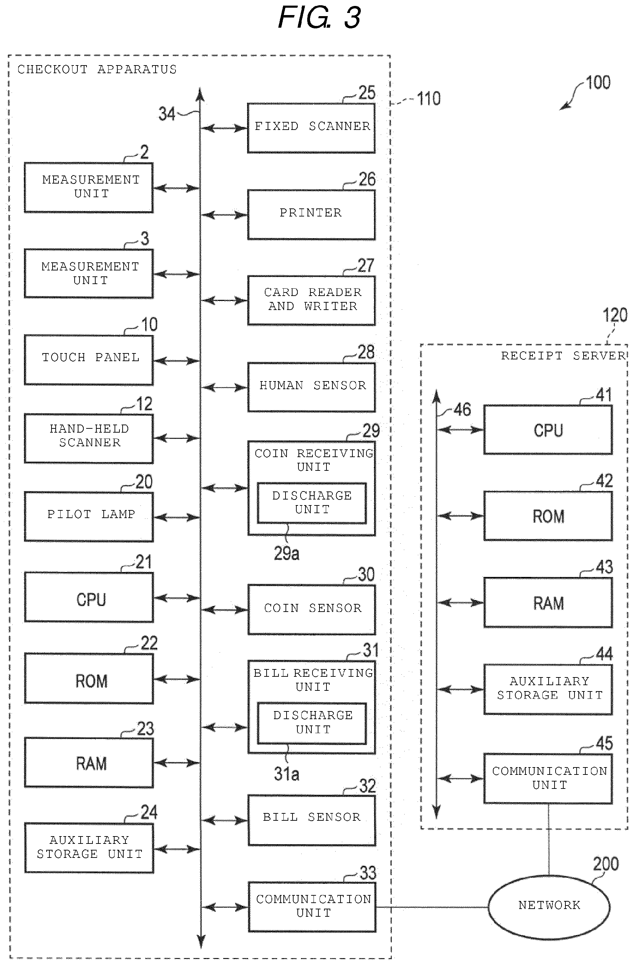

FIG. 3 is a block diagram illustrating a main circuit configuration of the checkout apparatus 110 and the receipt server 120. In FIG. 3, the same reference numerals are given to the same components as those illustrated in FIGS. 1 and 2, and detailed description thereof will be omitted.

As illustrated in FIG. 3, the checkout apparatus 110 includes a central processing unit (CPU) 21, a read-only memory (ROM) 22, a random-access memory (RAM) 23, an auxiliary storage unit 24, a fixed scanner 25, a printer 26, a card reader and writer 27, a human sensor 28, a coin receiving unit 29, a coin sensor 30, a bill receiving unit 31, a bill sensor 32, a communication unit 33, and a communication line 34, in addition to the measurement units 2 and 3, the touch panel 10, the hand-held scanner 12, and the pilot lamp 20. The main body 1 accommodates the CPU 21, the ROM 22, the RAM 23, the auxiliary storage unit 24, the fixed scanner 25, the printer 26, the card reader and writer 27, the human sensor 28, the coin receiving unit 29, the coin sensor 30, the bill receiving unit 31, and the bill sensor 32. In addition, the measurement units 2 and 3, the touch panel 10, the hand-held scanner 12, the CPU 21, the ROM 22, the RAM 23, the auxiliary storage unit 24, the fixed scanner 25, the printer 26, the card reader and writer 27, the coin receiving unit 29, the coin sensor 30, the bill receiving unit 31, and the communication unit 33 are connected to each other via the communication line 34, which may be, for example, a system bus.

The CPU 21, the ROM 22, the RAM 23, and the auxiliary storage unit 24, which are connected to each other via the communication line 34, constitute a computer that controls the checkout apparatus 110.

The CPU 21 corresponds to a central processor of the computer. The CPU 21 controls each unit based on an operating system and application programs stored in the ROM 22 and the auxiliary storage unit 24 so as to realize various functions of the checkout apparatus 110.

The ROM 22 corresponds to a main memory of the computer. The ROM 22 stores the operating system and the application programs. One of the application programs may include a control program for control processing to be described later. The ROM 22 also may store data to be referenced when the CPU 21 performs various processing.

The RAM 23 corresponds to a working memory of the computer. The RAM 23 stores data to be referenced when the CPU 21 performs various processing. The RAM 23 is used as a so-called work area that stores data to be temporarily used when the CPU21 performs various processing.

The auxiliary storage unit 24 corresponds to an auxiliary storage of the computer. As the auxiliary storage unit 24, for example, an electric erasable programmable read-only memory (EEPROM), a hard disc drive (HDD), a solid state drive (SSD), or the like may be used. The auxiliary storage unit 24 stores data to be used when the CPU 21 performs various processing and data generated by processing of the CPU 21. The auxiliary storage unit 24 may also store an application program. The application program stored in the auxiliary storage unit 24 may include a control program for control processing to be described later. The control program is typically stored in the ROM 22 or the auxiliary storage unit 24 when installing the checkout apparatus 110. The control program may be written into the auxiliary storage unit 24 according to an instruction of any operator after installing the checkout apparatus 110. In this case, the control program is installed by being recorded in a removable recording medium such as a magnetic disk, a magneto-optical disk, an optical disk, or a semiconductor memory, or via a network.

The fixed scanner 25 captures an image of the merchandise held over the front of the scanner window 11, and identifies a bar code displayed on the merchandise by image processing. The fixed scanner 25 outputs information represented by the identified bar code to the CPU 21. As the fixed scanner 25, other types of devices, for example, a device that identifies the bar code by using reflection of laser light, may also be used.

The printer 26 includes a receipt printer and a journal printer. The receipt printer issues various slips by printing information on receipt paper. The various slips include a receipt (hereinafter, referred to as a paper receipt) representing contents of a commercial transaction and a lost property slip, which will be described later. The slip issued by the receipt printer is discharged from the receipt issue slot 13 to the outside of the main body 1. The journal printer prints journal data, including the information to be printed on the receipt paper by the receipt printer, on journal paper. The journal paper is held in the inside of the main body 1 until the journal paper is removed by a maintenance person.

The card reader and writer 27 reads data recorded on the card which is inserted to the card insertion slot 14 by the shopper. The card reader and writer 27 also writes data to the card. The card may be a point card, an IC card for settlement, or the like. The card reader and writer 27 discharges the card with which necessary processing is completed from the card insertion slot 14 to the outside of the main body 1. The card insertion slot 14 holds the card to be discharged in a state where a portion of the card protrudes to the outside of the main body 1.

The human sensor 28 detects presence of a person who is positioned facing the checkout apparatus 110. As the human sensor 28, a known sensor such as an infrared-type sensor may be used.

The coin receiving unit 29 accommodates the coins which are received inside of the main body 1 from the opening 15a of the coin input tray 15. The coin receiving unit 29 includes a discharge unit 29a. The discharge unit 29a discharges coins as change to the change tray 16. Thus, the discharge unit 29a is an example of a discharge mechanism.

The coin sensor 30 detects coins discharged to the reject tray 17. As the coin sensor 30, for example, various known devices may be used, such as a device that detects a change in a magnetic field according to approach of a coin, or a device that detects presence or absence of interruption of an optical path by a coin. The coin sensor 30 is an example of an article detection device.

The bill receiving unit 31 accommodates the bill inserted from the bill insertion slot 18. The bill receiving unit 31 includes a discharge unit 31a. The discharge unit 31a discharges the bill as change from the bill discharge slot 19. Thus, the discharge unit 31a is an example of a discharge mechanism.

The bill sensor 32 detects bills held by the bill discharge slot 19. As the bill sensor 32, for example, various known devices may be used, such as a device that detects a change in a magnetic field according to approach of a bill, a device that detects presence or absence of interruption of an optical path by a bill. The bill sensor 32 is an example of an article detection device.

The communication unit 33 performs data communication via a network 200. As the communication unit 33, when the network 200 is the Internet, for example, a known communication device which is adaptable to the Internet may be used.

The receipt server 120 performs various information processing for providing an electronic receipt service via the network 200. The receipt server 120 includes a CPU 41, a ROM 42, a RAM 43, an auxiliary storage unit 44, and a communication unit 45. The CPU 41, the ROM 42, the RAM 43, the auxiliary storage unit 44, and the communication unit 45 are connected to each other via a communication line 46 including a system bus.

The CPU 41, the ROM 42, the RAM 43, and the auxiliary storage unit 44, which are connected to each other via the communication line 46, constitute a computer that controls the receipt server 120.

The CPU 41 corresponds to a central processor of the computer. The CPU 41 controls each unit based on an operating system and application programs stored in the ROM 42 so as to realize various functions of the receipt server 120.

The ROM 42 corresponds to a main memory of the computer. The ROM 42 stores the operating system and the application programs. The ROM 42 also may store data to be referenced when the CPU 41 performs various processing.

The RAM 43 corresponds to a working memory of the computer. The RAM 43 stores data to be referenced when the CPU 41 performs various processing. The RAM 43 is used as a so-called work area that stores data to be temporarily used when the CPU41 performs various processing.

The auxiliary storage unit 44 corresponds to an auxiliary storage of the computer. As the auxiliary storage unit 44, for example, an EEPROM, an HDD, an SSD, or the like may be used. The auxiliary storage unit 44 stores data to be used when the CPU 41 performs various processing and data generated by processing of the CPU 41. The auxiliary storage unit 44 may also store an application program. The application program is typically stored in the ROM 42 or the auxiliary storage unit 44 when installing the receipt server 120. The application program may be written into the auxiliary storage unit 44 according to an instruction of an operator after installing the receipt server 120. In this case, the application program is installed from a removable recording medium such as a magnetic disk, a magneto-optical disk, an optical disk, or a semiconductor memory, or via a network.

The communication unit 45 performs data communication via a network 200. As the communication unit 45, when the network 200 is the Internet, for example, a known communication device which is adaptable to the Internet may be used.

Next, an operation of a checkout system 100 including the checkout apparatus 110 and the receipt server 120 will be described.

When the checkout apparatus 110 is in an operation state, the CPU 21 waits until various instructions are performed. When an operation for instructing to execute accounting related to the commercial transaction is performed by, for example, the touch panel 10, the CPU 21 starts the control processing according to the control program stored in the ROM 22, in response to the operation. The contents of the processing will be described below as an example, and various processing capable of obtaining the same result may be appropriately used. In addition to a commercial transaction such as purchase and sale of merchandise, the following processing may also be used for accounting related to another type of transaction such as provision of a service.

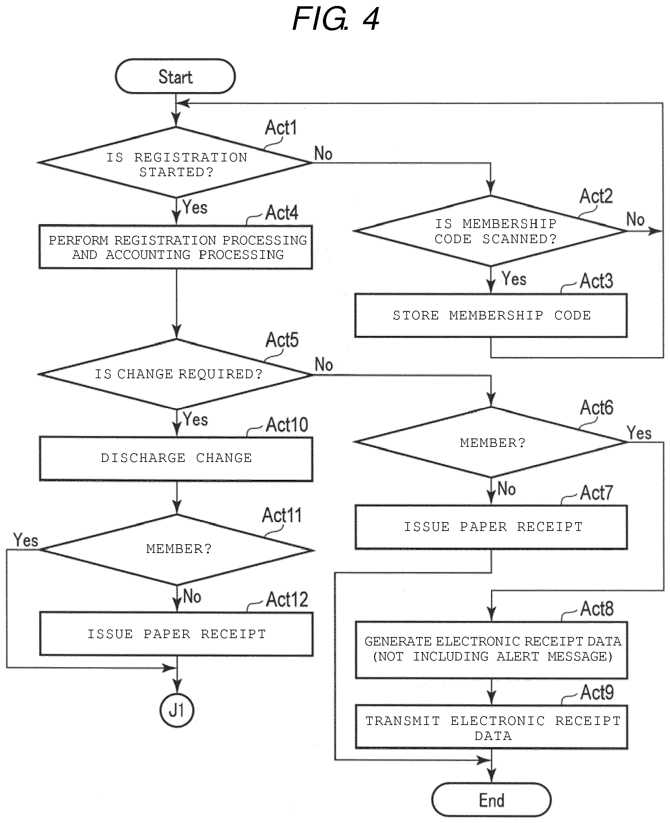

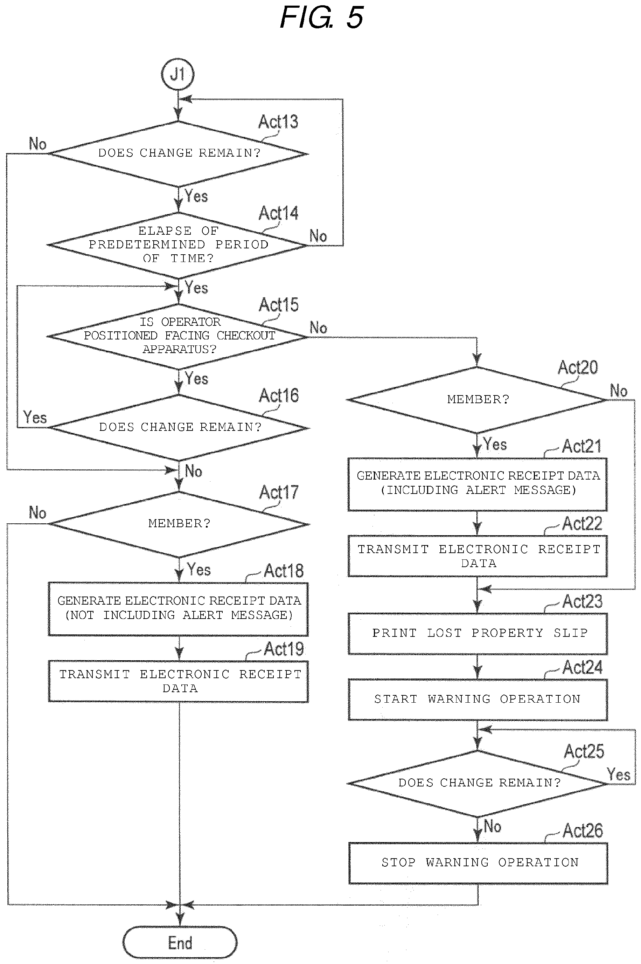

FIGS. 4 and 5 are flowcharts of the control processing performed by the CPU 21. The CPU 21 executes the control processing based on the control program stored in the ROM 22 or the auxiliary storage unit 24. The contents of the control processing illustrated in FIGS. 4 and 5 will be described below as an example, and the order of each process may be appropriately changed or another process may be added as long as the same result can be obtained.

In Act 1, the CPU 21 checks whether or not a registration operation by an operator is started. When a registration operation is not performed, the CPU 21 determines that the check result in Act 1 is No, and proceeds to Act 2.

In Act 2, the CPU 21 checks whether or not a membership code is scanned. When a membership code is not scanned, the CPU 21 determines that the check result in Act 2 is No, and returns to Act 1.

Therefore, in Act 1 and Act 2, the CPU 21 waits until registration is started or a membership code is scanned.

Before performing the registration operation related to a commercial transaction that the operator wants to apply the electronic receipt service, the operator holds a bar code representing a membership code over the hand-held scanner 12 or the fixed scanner 25. The hand-held scanner 12 or the fixed scanner 25 scans the bar code, and extracts a membership code from the bar code. According to the scanning, the CPU 21 determines that the check result in Act 2 is Yes, and proceeds to Act 3.

In Act 3, the CPU 21 causes the RAM 23 or the auxiliary storage unit 24 to store the membership code extracted by the hand-held scanner 12 or the fixed scanner 25. Then, the CPU 21 returns to the standby state of Act 1 and Act 2. In a case where the CPU 21 proceeds to Act 3 in response to a membership code being scanned again, the CPU 21 overwrites the membership code stored in the RAM 23 or the auxiliary storage unit 24 with a newly extracted membership code.

As described above, in the present embodiment, the membership code is acquired before the start of the merchandise registration. Alternatively, the CPU 21 may acquire the membership code even while the merchandise registration is being performed.

When starting the registration, the operator performs a registration operation related to merchandise for purchase in the commercial transaction. The registration operation includes an operation to hold the merchandise over the front of the scanner window 11, an operation to move the hand-held scanner 12 to scan the bar code displayed on the merchandise, an operation to touch the touch panel 10 so as to specify the merchandise, or the like.

When the purchased merchandise is held over the front of the scanner window 11, the fixed scanner 25 identifies the bar code displayed on the merchandise by image processing, and transmits the information represented by the bar code to the CPU 21. When the hand-held scanner 12 is moved to scan the bar code, the hand-held scanner 12 identifies the bar code and transmits the information represented by the bar code to the CPU 21. When the operation to touch the touch panel 10 is performed so as to specify the merchandise, the touch panel 10 transmits touch position information to the CPU 21.

When the registration operation as described above is performed in the standby state of Act 1 and Act 2, the CPU 21 determines that the check result in Act 1 is Yes, and proceeds to Act 4.

In Act 4, the CPU 21 performs registration processing and accounting processing. Specifically, the CPU 21 determines a merchandise code which is included in the information transmitted from the fixed scanner 25 or the hand-held scanner 12, or a merchandise code which is associated with the touch location transmitted from the touch panel 10, as a merchandise code of the merchandise. The CPU 21 updates information in a merchandise list area which is set in the RAM 23 so as to add the merchandise identified by the merchandise code to a purchased merchandise list.

When registration of all of the merchandise is completed and an operation instructing execution of the accounting processing is performed, for example, on the touch panel 10, the CPU 21 calculates a settlement amount to be settled for purchase and sale of all of the registered merchandise. The CPU 21 performs settlement based on the calculated settlement amount, by using a settlement method designated by the operator among a plurality of settlement methods. As the settlement method, various settlement methods using cash, a credit card, a debit card, a prepaid card, electronic money, a point, a money coupon, or the like may be appropriately used. In this manner, the CPU 21 executes the control processing based on the control program, and thus the computer including the CPU 21 functions as a settlement unit.

In Act 5, the CPU 21 checks whether or not change is required as a result of the settlement processing. When change is not required, the CPU 21 determines that the check result in Act 5 is No, and proceeds to Act 6.

In Act 6, the CPU 21 checks whether or not the operator is a member of the electronic receipt service. When the membership code is not stored in the RAM 23 or the auxiliary storage unit 24, the CPU 21 determines that the check result in Act 6 is No, and proceeds to Act 7.

In Act 7, the CPU 21 generates print data for printing a character string representing the contents of the transaction on the receipt paper, based on the purchased merchandise list and the result of the settlement processing. The CPU 21 transmits the print data to the printer 26, and issues a paper receipt by causing the printer 26 to perform printing according to the print data. Then, the CPU 21 ends the control processing illustrated in FIGS. 4 and 5.

On the other hand, when the membership code is stored in the RAM 23 or the auxiliary storage unit 24, the CPU 21 determines that the check result in Act 6 is Yes, and proceeds to Act 8.

In Act 8, the CPU 21 generates electronic receipt data related to the current commercial transaction. The electronic receipt data generated by the CPU 21 appropriately includes, for example, a store code, a date and time, a cash register number, a salesperson code, a salesperson name, a user code, a merchandise code, a merchandise name, a unit price, a subtotal amount, a tax amount, a total amount, a deposit amount, a change amount, a sales number, a receipt number, and the like. That is, the electronic receipt data is an example of transaction data. In Act 8, the CPU 21 does not include an alert message, which will be described later, in the generated electronic receipt data. The processing performed by the CPU 21 may be the same as the processing performed by an existing POS terminal or an existing checkout apparatus. In this manner, the CPU 21 executes the control processing based on the control program, and thus the computer including the CPU 21 as the central portion functions as a generation unit.

In Act 9, the CPU 21 transmits the electronic receipt data to the receipt server 120. Specifically, the CPU 21 transmits the electronic receipt data to the communication unit 33, and instructs the communication unit 33 to transmit the electronic receipt data. When receiving the instruction, the communication unit 33 transmits the corresponding electronic receipt data to the receipt server 120 via the network 200. Then, the CPU 21 ends the control processing illustrated in FIGS. 4 and 5. In this manner, the CPU 21 executes the control processing based on the control program, and thus the computer including the CPU 21 functions as a first transmission control unit. A function of a first transmission unit is realized by cooperation of a function as the first transmission control unit and a function of the communication unit 33.

On the other hand, in a case where change is required as the result of the accounting processing in Act 4, the CPU 21 determines that the check result in Act 5 is Yes, and proceeds to Act 10.

In Act 10, the CPU 21 determines an amount of money to be paid based on the change amount calculated in the accounting processing, instructs the coin receiving unit 29 to discharge a corresponding coin amount, and instructs the bill receiving unit 31 to discharge a corresponding bill amount. When receiving each of the instructions, the coin receiving unit 29 and the bill receiving unit 31 respectively discharge the coins and the bills as the change by driving each of the discharge unit 29a and the discharge unit 31a. The discharged coins and bills are held by the change tray 16 and the bill discharge slot 19. In this manner, when the coin receiving unit 29 discharges the coins, the coin sensor 30 is able to detect the coins. When the bill receiving unit 31 discharges the bills, the bill sensor 32 is able to detect the bills. Therefore, the CPU 21 executes the control processing based on the control program, and thus the computer including the CPU 21 functions as a discharge control unit. A function of a discharge unit is realized by cooperation of the CPU 21 and the discharge unit 29a and the discharge unit 31a.

In Act 11, similar to Act 6, the CPU 21 checks whether or not the operator is a member of the electronic receipt service. When the operator is not a member of the electronic receipt service and thus it is determined that the check result in Act 11 is No, the CPU 21 proceeds to Act 12.

In Act 12, similar to Act 7, the CPU 21 issues a paper receipt. Then, the CPU 21 proceeds to Act 13 of FIG. 5. When the operator is a member of the electronic receipt service and thus it is determined that the check result in Act 11 is Yes, the CPU 21 skips Act 12 and proceeds to Act 13.

In Act 13, the CPU 21 checks whether or not the discharged change remains on the change tray 16 or in the bill discharge slot 19. When the coin sensor 30 or the bill sensor 32 detects the coins or the bills, the CPU 21 determines that the check result in Act 13 is Yes, and proceeds to Act 14.

In Act 14, the CPU 21 checks whether or not a predetermined period of time elapses after discharge of the change. When the predetermined period of time has not elapsed, it is determined that the check result in Act 14 is No, and the CPU 21 returns to Act 13. It is assumed that the predetermined period of time is, for example, 60 seconds. Here, the predetermined period of time may be arbitrary. The predetermined period of time may be determined by, for example, a designer of the control program representing the control processing illustrated in FIGS. 4 and 5, an administrator of the checkout apparatus 110, or the like.

Thus, in Act 13 and Act 14, the CPU 21 waits until the predetermined period of time elapses in a state where the change remains. When the predetermined period of time elapses and thus it is determined that the check result in Act 14 is Yes, the CPU 21 proceeds to Act 15.

In Act 15, the CPU 21 checks whether or not the operator is positioned facing the checkout apparatus 110. When the human sensor 28 detects the operator, the CPU 21 determines that the check result in Act 15 is Yes, and proceeds to Act 16.

In Act 16, the CPU 21 checks whether or not the change remains on the change tray 16 or in the bill discharge slot 19. When the coin sensor 30 or the bill sensor 32 detects the coins or the bills, the CPU 21 determines that the check result in Act 16 is Yes, and returns to Act 15.

Thus, in Act 15 and Act 16, the CPU 21 waits until either the operator leaves the front of the checkout apparatus 110 or all of the change is taken.

When either the coin sensor 30 or the bill sensor 32 does not detect the coins or the bills, the CPU 21 determines that the check result in Act 16 is No, and proceeds to Act 17. Thus, in a case where all of the change is taken before the operator leaves from the front of the checkout apparatus 110, the CPU 21 proceeds to Act 17. In a standby state of Act 13 and Act 14, when either the coin sensor 30 or the bill sensor 32 does not detect the coins or the bills before the predetermined period of time elapses after discharge of the change, the CPU 21 determines that the check result in Act 13 is No. In this case, the CPU 21 skips Act 15 and Act 16, and proceeds to Act 17.

In Act 17, similar to Act 6, the CPU 21 checks whether or not the operator is a member of the electronic receipt service. When the operator is a member of the electronic receipt service and thus it is determined that the check result in Act 17 is Yes, the CPU 21 proceeds to Act 18.

In Act 18, similar to Act 8, the CPU 21 generates electronic receipt data.

In Act 19, similar to Act 9, the CPU 21 transmits the electronic receipt data to the receipt server 120. Then, the CPU 21 ends the control processing illustrated in FIGS. 4 and 5.

When the operator is not a member of the electronic receipt service, the CPU 21 determines that the check result in Act 17 is No. In this case, the CPU 21 skips Act 18 and Act 19, and ends the control processing illustrated in FIGS. 4 and 5.

On the other hand, in a state where the coin sensor 30 or the bill sensor 32 detects the coins or the bills, and when the human sensor 28 is in a non-detection state, the CPU 21 determines that the check result in Act 15 is No, and proceeds to Act 20. Thus, in a case where the operator leaves the front of the checkout apparatus 110 while the change remains, the CPU 21 proceeds to Act 20.

In Act 20, similar to Act 6, the CPU 21 checks whether or not the operator is a member of the electronic receipt service. When the operator is a member of the electronic receipt service and thus it is determined that the check result in Act 20 is Yes, the CPU 21 proceeds to Act 21.

In Act 21, similarly to Act 8, the CPU 21 generates electronic receipt data. Here, the CPU 21 includes an alert message in the generated electronic receipt data. The alert message is information indicating that an article has been forgotten to be taken. In the present embodiment, the alert message is a text message notifying that the operator forgot to take the change. The alert message may be an image with which a human can notice that he/she forgot to take change. For example, in a case where both of the coin sensor 30 and the bill sensor 32 detect the coin and the bill, the CPU 21 sets contents of the alert message to, as an example, "The change for this transaction has been forgotten to be taken." In a case where only the coin sensor 30 detects the coins, the CPU 21 sets contents of the alert message to, as an example, "The coins of the change for this transaction has been forgotten to be taken." In a case where only the bill sensor 32 detects the bills, the CPU 21 sets contents of the alert message to, as an example, "The bills of the change for this transaction has been forgotten to be taken."

In Act 22, similar to Act 9, the CPU 21 transmits the electronic receipt data to the receipt server 120. Then, the CPU 21 proceeds to Act 23. In this manner, the CPU 21 executes the control processing based on the control program, and thus the computer including the CPU 21 functions as a second transmission control unit. A function as a second transmission unit is realized by cooperation of a function as the second transmission control unit and a function of the communication unit 33.

When the operator is not a member of the electronic receipt service, the CPU 21 determines that the check result in Act 20 is No, skips Act 21 and Act 22, and proceeds to Act 23.

In Act 23, the CPU 21 instructs the printer 26 to print a lost property slip. Specifically, the CPU 21 generates an image to be printed on the lost property slip, and transmits the image to the printer 26. The printer 26 prints the image transmitted from the CPU 21 on receipt paper by using the receipt printer, and discharges the receipt paper from the receipt issue slot 13.

The lost property slip represents, for example, a text message informing where the operator forgot to take the change, the contents of the commercial transaction in which change is forgot to be taken, the result of the accounting, and the like.

In Act 24, the CPU 21 starts a warning operation.
The warning operation is an operation for notifying the salesperson that change has been forgotten to be taken. The warning operation is, for example, blinking of the pilot lamp 20. The warning operation may be an output of a warning sound or a notification to another terminal. In addition, the warning operation may include a plurality of operations. In this manner, the CPU 21 executes the control processing based on the control program, and thus the computer including the CPU 21 functions as a notification unit.

In Act 25, the CPU 21 checks whether or not the change remains on the change tray 16 or in the bill discharge slot 19. When the coin sensor 30 or the bill sensor 32 detects the coins or the bills, the CPU 21 determines that the check result in Act 25 is Yes, and repeats Act 25. Thus, in Act 25, the CPU 21 waits until the change which has been forgotten to be taken is removed.

When a salesperson who is in charge of monitoring the checkout apparatus 110 notices, in response to the warning operation, that change has been forgotten to be taken, for example, the salesperson removes the change which was forgotten to be taken, and stores the removed change together with the lost property slip. Here, at least one of the coin receiving unit 29 and the bill receiving unit 31 may have a collection function, and the coins or the bills remaining on the change tray 16 or in the bill discharge slot 19 may be automatically collected using the collecting function.

When the change is removed in this way, both of the coin sensor 30 and the bill sensor 32 no longer detect the coins and the bills. Thus, the CPU 21 determines that the check result in Act 25 is No, and proceeds to Act 26.

In Act 26, the CPU 21 stops the warning operation started in Act 24. Then, the CPU 21 ends the control processing illustrated in FIGS. 4 and 5.

The electronic receipt data, which is transmitted from the communication unit 33 to the network 200 according to the process of Act 9, Act 19, or Act 22 by the CPU 21, is transmitted to the receipt server 120 by the network 200, and is received by the communication unit 45. The electronic receipt data is stored in the auxiliary storage unit 44 under the control of the CPU 41. That is, the auxiliary storage unit 44 is an example of a storage unit that stores the electronic receipt data so that the transaction data and the alert message are stored in association with each other. The CPU 41 causes an arbitrary information terminal to display an electronic receipt screen by processing similar to that performed in an existing electronic receipt server. Thus, the computer including the CPU 41 functions as an output unit.

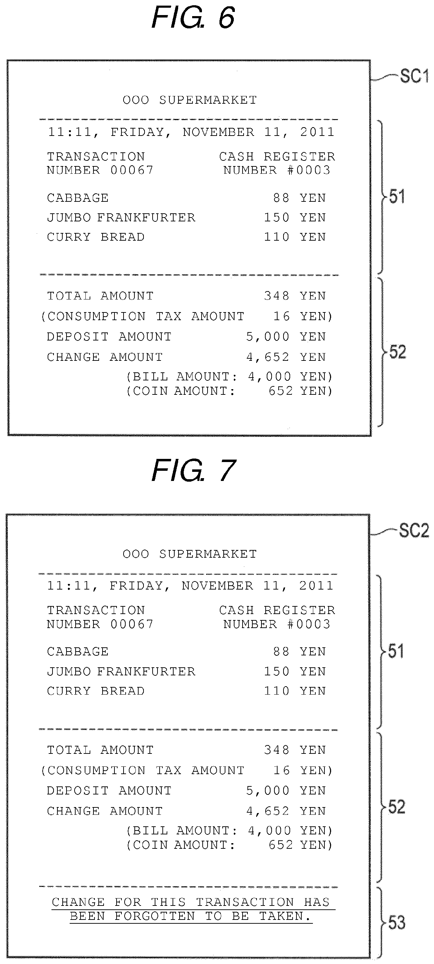

FIG. 6 is a diagram illustrating an example of an electronic receipt screen SC1 related to a commercial transaction in which change has not been forgotten to be taken.

The electronic receipt screen SC1 includes a region 51 and a region 52.

In the region 51, contents of a transaction in which change was not forgotten to be taken is displayed. Among information representing the contents of the transaction, which information is displayed in the region 51 is arbitrary and may be determined by, for example, the designer of the application program for the processing in the receipt server 120. In the example of FIG. 6, information which identifies a transaction in which change was not forgotten to be taken is shown in the region 51. The information includes a transaction number, a cash register number, a transaction date and time, and a purchased merchandise list.

In the region 52, a result of accounting is displayed. Among information representing the result of accounting, which information is displayed in the region 52 is arbitrary and may be determined by, for example, the designer of the application program. In the example of FIG. 6, in the region 52, a settlement amount, a consumption tax amount, a deposit amount, a change amount, and a coin amount and a bill amount of the change, are displayed.

FIG. 7 is a diagram illustrating an example of an electronic receipt screen SC2 related to a commercial transaction in which change has been forgotten to be taken.

The electronic receipt screen SC2 includes a region 53 in addition to the region 51 and the region 52.

In the region 53, an alert message is displayed. In the example of FIG. 7, in the region 53, a message for informing that the operator forgot to take only the coins of the change is displayed.

As described above, according to the checkout system 100, when the operator accesses the receipt server 120 using an arbitrary information terminal and an electronic receipt screen related to a commercial transaction in which change has been forgotten to be taken is displayed, an alert message is displayed as illustrated in the region 53 of FIG. 7. The purchaser of the commercial transaction, who wants to confirm the contents of the commercial transaction, sees the alert message. Thus, the purchaser can realize that he/she forgot to take the change.

In this manner, in Act 21 and Act 22, the CPU 21 generates and transmits the electronic receipt data including the alert message. Thus, the purchaser is notified of the alert message. Accordingly, the message indicating that the change has been forgotten to be taken is output in accordance with the operation caused by the CPU 21 performing the processes of Act 21 and Act 22. The CPU 21 executes the control processing based on the control program, and thus the computer including the CPU 21 functions as a notification unit.

In addition, according to the checkout system 100, in a case where the purchaser requests a salesperson to return the change that he/she forgot to take, the purchaser presents the electronic receipt screen including the alert message to the salesperson. Thus, the salesperson can easily determine which commercial transaction corresponds to the change requested to be returned. The salesperson can easily determine whether to return the change which is forgotten to be taken, by comparing the lost property slip and the electronic receipt screen. In addition, in a case where bundles of the collected change for a plurality of commercial transactions are stored, the salesperson can easily determine which of the bundles corresponds to the change to be returned.

Based on a request from the CPU 21, the CPU 41 may add information indicating completion of returning the change, to the electronic receipt data related to the commercial transaction for which the change is returned. The CPU 41 does not display the alert message on the electronic receipt screen based on the electronic receipt data to which the information is added. Alternatively, based on a request from the CPU 21, the CPU 41 may delete the alert message for from the electronic receipt data related to the commercial transaction in which the change has been returned. Thus, thereafter, the alert message is not displayed on the electronic receipt screen based on the electronic receipt data. In this manner, the electronic receipt screen including the alert message can be used as a certificate of a person who forgot to take the change. In addition, by using the electronic receipt screen, the checkout apparatus 110 may omit printing of the lost property slip.

### Second Embodiment

Hereinafter, a second embodiment will be described with reference to the drawings. The configuration of the checkout system 100 according to the second embodiment is the same as that of the checkout system according to the first embodiment. The second embodiment is different from the first embodiment in that a portion of the application programs stored in the ROMs 22 and 42 or the auxiliary storage units 24 and 44 and the contents of the processing by the CPU 21 and the CPU 41 based on the application programs are different.

Next, an operation of the checkout system 100 according to the second embodiment will be described.

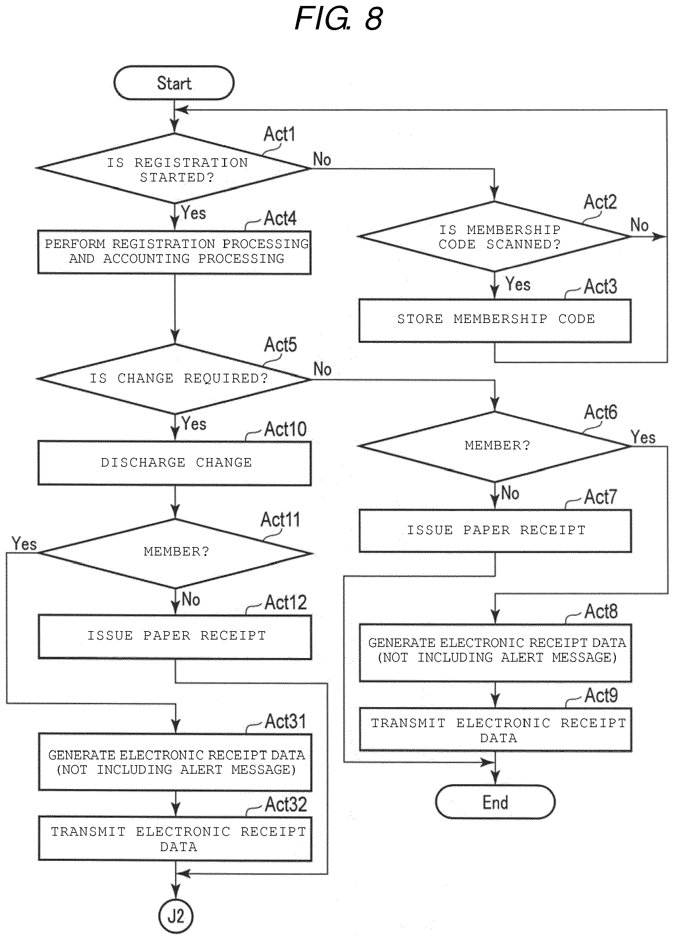

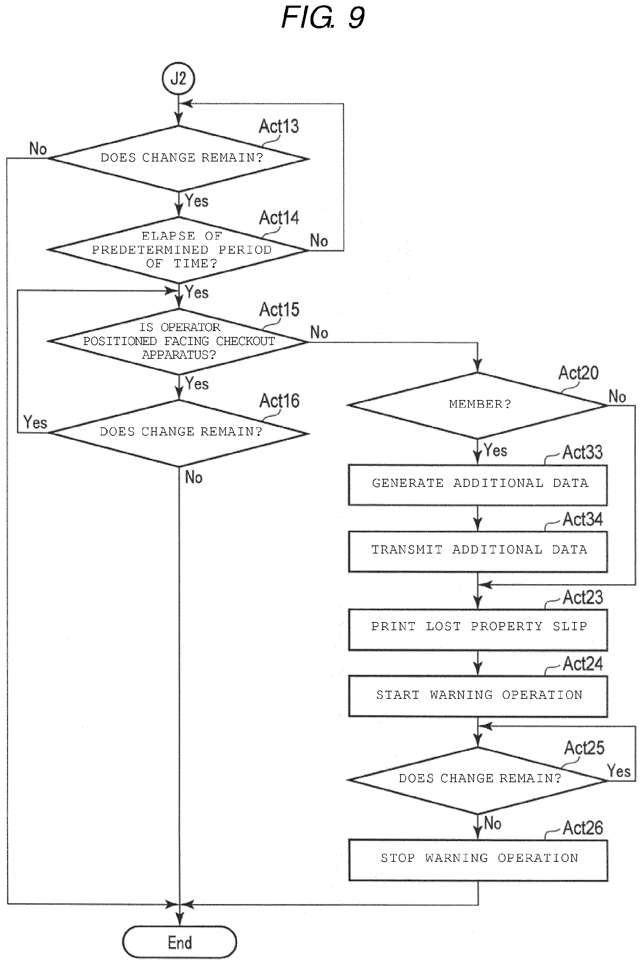

FIGS. 8 and 9 are flowcharts of the control processing by the CPU 21. In FIGS. 8 and 9, processes similar to those in FIGS. 4 and 5 are denoted by the same reference numerals, and a detailed description thereof will be omitted. The contents of the control processing illustrated in FIGS. 8 and 9 will be described below as an example, and the order of each process may be appropriately changed or another process may be added as long as the same result can be obtained.

The CPU 21 executes processes of Act 1 to Act 12 illustrated in FIG. 8 in the same manner as in the first embodiment. In a case where it is determined that the check result in Act 11 is Yes, the CPU 21 proceeds to Act 31.

In Act 31, similar to Act 8, the CPU 21 generates electronic receipt data which does not include the alert message.

In Act 32, similar to Act 9, the CPU 21 transmits the electronic receipt data to the receipt server 120. Then, the CPU 21 proceeds to Act 13 of FIG. 9.

The CPU 21 executes processes of Act 13 to Act 16 illustrated in FIG. 9 in the same manner as in the first embodiment. When either the coin sensor 30 or the bill sensor 32 does not detect the coins or the bills and thus it is determined that the check result in Act 16 is No, the CPU 21 does not execute processes of Act 17 to Act 19 in the first embodiment, and ends the control processing illustrated in FIGS. 8 and 9 as it is.

Similar to the first embodiment, when the process proceeds from Act 15 to Act 20 and it is determined that the check result in Act 20 is Yes, the CPU 21 executes processes of Act 33 and Act 34 instead of processes of Act 21 and Act 22 in the first embodiment.

In Act 33, the CPU 21 generates additional data representing that change has been forgotten to be taken. The data used as the additional data is arbitrary. For example, the additional data may be determined by the designer of the control program representing the control processing illustrated in FIGS. 8 and FIG. 9. Here, it is assumed that the additional data includes an identification code of the electronic receipt data generated in Act 31. In addition, in the present embodiment, it is assumed that the additional data includes an alert message similar to the message in the first embodiment. The additional data may include a user code stored in Act 3.

In Act 34, the CPU 21 transmits the additional data to the receipt server 120. Specifically, the CPU 21 transmits the additional data to the communication unit 33, and instructs the communication unit 33 to transmit the additional data. When receiving the instruction, the communication unit 33 transmits the corresponding additional data to the receipt server 120 via the network 200. Then, the CPU 21 executes a process of Act 23 and subsequent processes in the same manner as in the first embodiment.

The additional data transmitted from the communication unit 33 to the network 200 is transmitted to the receipt server 120 by the network 200, and is received by the communication unit 45. The additional data is stored in the auxiliary storage unit 44 under the control of the CPU 41.

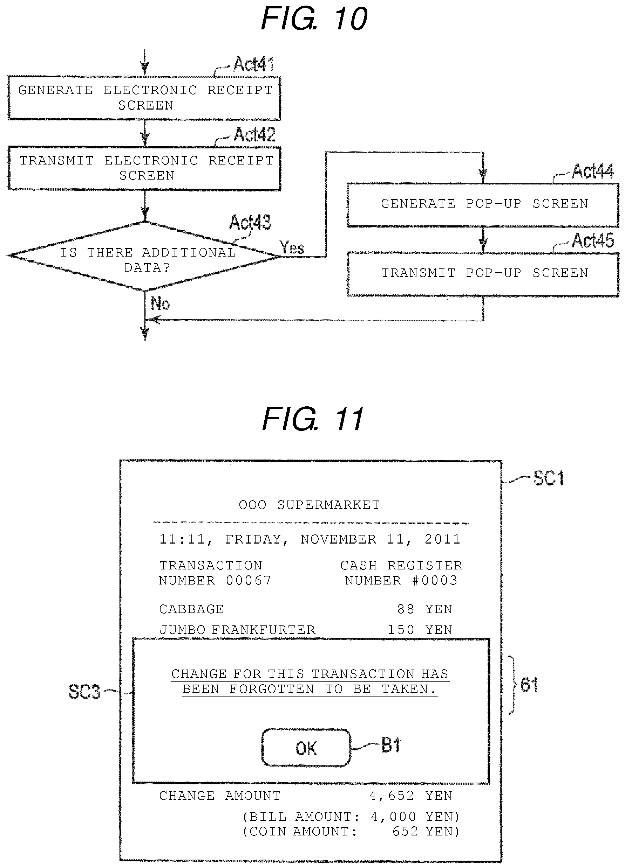

FIG. 10 is a flowchart illustrating a portion of processing for providing the electronic receipt service by the CPU 41.

When an arbitrary information terminal accesses the receipt server 120 and provision of an electronic receipt screen is requested, the CPU 41 proceeds to Act 41 in FIG. 10.

In Act 41, the CPU 41 generates an electronic receipt screen based on the electronic receipt data. The electronic receipt data according to the present embodiment does not include the alert message. Thus, the electronic receipt screen generated in Act 41 is like, for example, the electronic receipt screen SC1 illustrated in FIG. 6.

In Act 42, the CPU 41 transmits the electronic receipt screen to the information terminal which requested the electronic receipt screen. Specifically, the CPU 41 transmits data representing the electronic receipt screen to the communication unit 45, and instructs the communication unit 45 to transmit the data. When receiving the instruction, the communication unit 45 transmits the corresponding data to the information terminal via the network 200. When receiving the data, the information terminal displays the electronic receipt screen.

In Act 43, the CPU 41 checks whether or not there is additional data corresponding to the electronic receipt data which is used for generation of the electronic receipt screen. Specifically, the CPU 41 checks whether or not additional data including an identification code of the electronic receipt data which is used for generation of the electronic receipt screen is stored in the auxiliary storage unit 44. When the corresponding additional data is stored, the CPU 41 determines that the check result in Act 43 is Yes, and proceeds to Act 44.

In Act 44, the CPU 41 generates a pop-up screen based on the additional data. The pop-up screen is a screen representing that change has been forgotten to be taken.

In Act 45, the CPU 41 transmits the pop-up screen to the information terminal which requested the electronic receipt screen. Specifically, the CPU 41 transmits data representing the pop-up screen to the communication unit 45, and instructs the communication unit 45 to transmit the data. When receiving the instruction, the communication unit 45 transmits the corresponding data to the information terminal via the network 200. When receiving the data, the information terminal displays the pop-up screen in a pop-up manner.

The CPU 41 executes processes in FIG. 10 such that processes of Act 42 and Act 45 are performed at a short time interval. Thus, in the information terminal, after the electronic receipt screen is displayed, the pop-up screen is quickly displayed in a state of being superimposed on the electronic receipt screen.

When the corresponding additional data is not present and thus it is determined that the check result in Act 43 is No, the CPU 41 does not execute processes of Act 44 and Act 45.

FIG. 11 is a diagram illustrating an example of a pop-up screen SC3 displayed in a pop-up manner, superimposed on the electronic receipt screen SC1 illustrated in FIG. 6.

The pop-up screen SC3 includes a region 61 and a button B1.

In the region 61, an alert message is displayed. In the example of FIG. 11, in the region 61, a message for informing that the operator forgot to take only the coins of the change is displayed.

The button B1 is a button with which the operator of the information terminal instructs removal of the pop-up screen SC3. When the button B1 is operated by the operator, the information terminal ends the display of the pop-up screen SC3.

In this manner, the checkout system 100 of the second embodiment displays the pop-up screen to thereby cause the purchaser of the commercial transaction in which change has been forgotten to be taken to realize that he/she forgot to take the change.

As described above, in Act 33 and Act 34, the CPU 21 generates and transmits the additional data. Thus, the purchaser is notified that change was forgotten to be taken. Accordingly, the message indicating that the change has been forgotten to be taken is output in accordance with the operation caused by the CPU 21 performing the processes of Act 33 and Act 34. The CPU 21 executes the control processing based on the control program, and thus the computer including the CPU 21 functions as a notification unit.

In addition, according to the checkout system 100, in a case where the purchaser requests a salesperson to return the change that he/she forgot to take, the purchaser presents the information terminal in a screen display state as illustrated in FIG. 11 to the salesperson. Thus, the salesperson can easily determine which commercial transaction corresponds to the change requested to be returned. The salesperson can easily determine whether to return the change which is forgotten to be taken, by comparing the slip for the change which is forgotten to be taken and the electronic receipt screen. In addition, in a case where bundles of the collected change for a plurality of commercial transactions are stored, the salesperson can easily determine which of the bundles corresponds to the change to be returned.

Based on a request from the CPU 21, the CPU 41 may add information indicating completion of returning the change, to the electronic receipt data related to the commercial transaction for which the change is returned. It is assumed that the CPU 41 determines that the check result in Act 43 is No after transmission of the electronic receipt screen based on the electronic receipt data to which the information is added. Alternatively, based on a request from the CPU 21, the CPU 41 may delete the additional data including an identification code of the electronic receipt data related to the commercial transaction for which the change is returned, from the auxiliary storage unit 44. Thus, thereafter, when displaying the electronic receipt screen based on the electronic receipt data, the pop-up screen based on the additional data is not displayed. In this manner, the pop-up screen can be used as a certificate of a person who forgot to take the change. In addition, by using the pop-up screen, the checkout apparatus 110 may omit printing of the lost property slip.

The CPU 41 may simultaneously transmit the electronic receipt screen and the pop-up screen. Specifically, in a case where it is determined that the check result in Act 43 is No, the CPU 41 may execute a process of Act 42. In Act 45, the CPU 41 may transmit the pop-up screen together with the electronic receipt screen generated in Act 41. In this case, when the electronic receipt screen and the pop-up screen are simultaneously transmitted by the application program for providing the electronic receipt service, the information terminal may realize a function of displaying the electronic receipt screen and the pop-up screen in a state illustrated in FIG. 11.

The present embodiment can be modified in various ways as follows.

In the first embodiment, in a case where the received electronic receipt data includes an alert message, the CPU 41 may perform push notification or transmit an e-mail to notify that the change has been forgotten to be taken. Specifically, in a case where it is checked that the alert message is included by analyzing the received electronic receipt data, the CPU 41 acquires a user code included in the electronic receipt data. The CPU 41 requests a predetermined notification server via the network 200 to perform push notification for notifying that the change is forgotten to be taken, to a push notification destination which is associated with the user code in advance. Alternatively, the CPU 41 transmits an e-mail including a text indicating that the change was forgotten to be taken, to an e-mail address as a destination that is associated with the acquired user code in advance, via the network 200. The CPU 41 operates to perform the push notification or transmit the e-mail to thereby output the message indicating that the change was forgotten to be taken.

In the second embodiment, the CPU 41 may perform push notification or e-mail transmission, in addition to or instead of display of the pop-up screen on the information terminal as described above. Specifically, in a case where the additional data is received, the CPU 41 acquires a user code, which is included in the electronic receipt data identified by an identification code included in the additional data, or a user code directly included in the additional data. The CPU 41 performs push notification or e-mail transmission in the same manner as described above. The CPU 41 operates for the push notification or the e-mail transmission, and thus the message indicating that the change was forgotten to be taken is output.

In each embodiment, for example, the following processing may be applied instead of printing of the lost property slip.
(1) Print information which is similar to that shown in the lost property slip, on journal paper only.
(2) Store information into a storage medium without printing information as shown in the lost property slip on any paper. In this case, the storage medium may be provided in the self-service checkout apparatus or may be provided in an external server or the like.
(3) In the case where a self-service checkout apparatus is compatible with a known electronic receipt service, notify an information terminal which is possessed by the shopper and which is registered in advance, via an electronic receipt server, that change has been forgotten to be taken.

Each embodiment may be applied to another type of settlement apparatus such as a settlement apparatus in a semi-self-service type checkout system.

In each embodiment, the article is not limited to the change, and may be various types of cards such as a credit card or an electronic money card.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A settlement device comprising:
a first sensor that outputs a first signal indicating whether a person is not in front of the settlement apparatus;
a receiving and discharging device that receives and discharges items in connection with settling a transaction;
a second sensor that outputs a second signal indicating whether an item discharged from the discharge device has not been taken;
an output device; and
a processor configured to:
perform a settlement processing for settling the transaction,
control the receiving and discharging device to discharge one or more items in connection with the settlement processing,
receive the first signal and, based on the first signal, determine whether the person is not in front of the settlement apparatus,
receive the second signal and, based on the second signal, determine whether the one or more items discharged from the receiving and discharging device have not been taken, and
if the person is determined to not be in front of the settlement apparatus and if the one or more items discharged from the receiving and discharging device are determined to have not been taken, control the output device to output a notification indicating that the one or more items have not been taken.

2. The device according to claim 1, wherein the receiving and discharging device includes a coin receiving unit that receives coins and a coin discharging unit that discharges coins to a tray.

3. The device according to claim 1 or 2, wherein the receiving and discharging device includes a bill receiving unit that receives bills and a bill discharging unit that discharges bills and holds the bills in a discharged state until the discharged bills are taken.

4. The device according to any one of claims 1 to 3, wherein the receiving and discharging device receives and discharges a card used in connection with the transaction.

5. The device according to any one of claims 1 to 4, wherein:
the output device is a lamp, and
the processor controls the lamp to perform a flashing operation as the notification.

6. The device according to any one of claims 1 to 5, wherein:
the output device is a printer, and
the processor controls the printer to print a message on a receipt as the notification.

7. The device according to any one of claims 1 to 6, wherein:
the output device is a communication interface, and
the processor generates an electronic message indicating that the one or more items have not been taken, and controls the communication interface to transmit the electronic message as the notification.

8. The device according to claim 7, wherein:
the processor generates an electronic receipt with information regarding the transaction, and
the electronic message is added to the electronic receipt.

9. A method of performing a settlement transaction in a settlement apparatus, comprising the steps of:
determining an amount of money due for settling the transaction;
receiving a payment of money for settling the transaction;
discharging, with a discharging device of the settlement apparatus, one or more items based on the received payment;
after discharging the one or more items, determining with a first sensor whether a person is not in front of the discharge device;
determining with a second sensor whether the one or more items discharged from the discharging device have not been taken; and
if the person is determined to not be in front of the settlement apparatus and if the one or more items discharged from the discharging device are determined to have not been taken, outputting a notification indicating that the one or more items have not been taken.

10. The method according to claim 9, wherein the discharging device discharges coins to a tray based on the received payment.

11. The method according to claim 9 or 10, wherein the discharging device discharges bills based on the received payment and holds the bills in a discharged state until the discharged bills are taken.

12. The method according to any one of claims 9 to 11, wherein the discharging device receives and discharges a card used in connection with the transaction.

13. The method according to any one of claims 9 to 12, wherein:
the output device is a lamp, and
outputting the notification includes controlling the lamp to perform a flashing operation.

14. The method according to any one of claims 9 to 13, wherein:
the output device is a printer, and
outputting the notification includes controlling the printer to print a message on a receipt.

15. The method according to any one of claims 9 to 14, wherein:
the output device is a communication interface, and
outputting the notification includes generating an electronic message indicating that the one or more items have not been taken, and controlling the communication interface to transmit the electronic message.
